# EUROPEAN PATENT APPLICATION

(11) **EP 4 650 596 A1**
(43) Date of publication of application: **19.11.2025**
(21) Application number: 24176241.8
(22) Date of filing: 16.05.2024
(51) Int. Cl.: F03D 13/20, F03D 80/80

(54) **LOWER AND UPPER TOWER SECTION FOR A TOWER OF A WIND TURBINE, TOWER, WIND TURBINE AND METHOD FOR MANUFACTURING A TOWER OF A WIND TURBINE**

(71) Applicant: Siemens Gamesa Renewable Energy A/S, 7330 Brande (DK)
(72) Inventor: Kumar Tinku, Abhiram, 560100 Bengaluru (IN); Game, Harshad, Pin-560100 Electronic city phase 1 (IN); V P, Ravindra, 560010 Bangalore (IN)
(74) Representative: SGRE-Association

(57) **Abstract**

A lower tower section (8) for a tower (7) of a wind turbine (1), comprising:
connection means (18) at an upper end (18a) thereof for mechanical connection with an upper tower section (9),
at least one high-voltage cable (14) extending between a lower and an upper portion (20, 21) of the lower tower section (8) with respect to a vertical direction (V) in the erected state of the tower (7),
a platform (16) in the upper portion (21), and
a junction box (22) arranged on the platform (16), having at least one output terminal (23) electrically connected with an upper cable end (26) of the at least one high-voltage cable (14) and at least one input terminal (24) configured for electrical connection with at least one further high-voltage cable (15) of the upper tower section (9).

Thus, the manufacture and transportation of large wind turbine towers is improved.

## Description

The present invention relates to a lower and an upper tower section for a tower of a wind turbine, a tower with such a lower and upper tower section, a wind turbine with such a tower and a method for manufacturing a tower of a wind turbine.

The tower height of modern wind turbines, in particular of offshore wind turbines, keeps increasing. For example, the height of a modern offshore wind turbine can be 160 m or larger. With such a large tower height, the manufacture and transportation of wind turbine towers becomes increasingly difficult.

It is one object of the present invention to provide an improved tower for a wind turbine.

According to a first aspect, a lower tower section for a tower of a wind turbine is provided. The lower tower section comprises:
connection means at an upper end thereof for mechanical connection with an upper tower section,
at least one high-voltage cable extending between a lower and an upper portion of the lower tower section with respect to a vertical direction in the erected state of the tower,
a platform in the upper portion, and
a junction box arranged on the platform, having at least one output terminal electrically connected with an upper cable end of the at least one high-voltage cable and at least one input terminal configured for electrical connection with at least one further high-voltage cable of the upper tower section.

Having a wind turbine tower split into at least a lower tower section and an upper tower section simplifies the manufacture and transportation of wind turbine towers, especially in the case of large towers. In particular, for offshore wind turbines, transporting large wind turbine towers (e.g., in a vertical position on a vessel) in one piece is technically challenging. Further, there are regulations (e.g., in USA) that set a maximum height for transportation of a tower or tower section to an offshore site. Having the at least one lower tower section and the at least one upper tower section each with at least one pre-installed high-voltage cable allows to transport the tower sections in an un-assembled state from a (e.g., onshore) pre-assembly site of the tower sections to an (e.g., offshore) erection site of the tower and the wind turbine.

In particular, the at least one high-voltage cable is pre-installed in the lower tower section such that it extends between the lower and upper portions of the lower tower section, i.e., through essentially the entire lower tower section. Advantageously, the at least one high-voltage cable is electrically connected at its upper cable end with the junction box. Thus, at the erection site, the at least one high-voltage cable of the lower tower section can be easily electrically connected with the at least one further high-voltage cable of the upper tower section by electrically connecting the at least one further high-voltage cable of the upper tower section with the junction box.

The wind turbine is an apparatus to convert the wind's kinetic energy into electrical energy. The wind turbine comprises, for example, a rotor having one or more blades connected each to a hub, a nacelle including a generator, and a tower holding, at its top end, the nacelle. The tower of the wind turbine is connected - e.g., via a transition piece - to a foundation of the wind turbine, such as a monopile or tripod in the seabed, a floating foundation or a concrete foundation.

The tower comprises, in the assembled state, the lower and the upper tower sections mechanically connected with each other at their respective connection means. The tower may in addition to the upper and lower tower sections comprise one or more further tower sections mechanically connected with the upper or lower tower section or another one of the further tower sections.

The connection means of the lower tower section are, for example, configured for mechanical connection with further connection means of the upper tower section. The connection means of the lower tower section comprises, for example, a flange configured for connection with a further flange of the upper tower section. In the assembled state, the flange of the lower tower section and the further flange of the upper tower section are, for example, bolted to each other.

The at least one high-voltage cable is in particular at least one continuous (i.e. one-piece) high-voltage cable extending from the lower portion of the lower tower section to the upper portion of the lower tower section.

The at least one high-voltage cable has, in particular, an upper cable end electrically connected in the upper portion of the lower tower section with the junction box. Further, the at least one high-voltage cable has, in particular, a lower cable end stored during transportation of the lower tower section in the lower portion of the lower tower section. Moreover, the lower cable end of the at least one high-voltage cable is configured for electrical connection with at least one high-voltage cable of a further tower section or with a switch gear of the wind turbine.

The upper tower section, the lower tower section and any optional further tower section may each be a one-piece tower section or may be assembled from two or more parts. In any case, the upper tower section, the lower tower section and any optional further tower section comprises for transportation of said tower section at least one pre-installed (e.g., continuous, i.e. one-piece) high-voltage cable extending essentially through the entire respective tower section.

The at least one high-voltage cable of the lower tower section, the at least one further high-voltage cable of the upper tower section and the at least one high-voltage cable of one or more optional further tower sections are configured for transferring - in the assembled state of the tower and the electrically connected state of said high-voltage cables - the electrical energy generated by the generator at the nacelle of the wind turbine to a bottom portion of the tower of the wind turbine. For example, during operation of the wind turbine, the assembled/electrically connected high-voltage cables connect the generator at the nacelle and a switch gear in the bottom portion of the tower, e.g., in a transition piece of the tower. Each of the high-voltage cables described herein has, for example, a weight of 10 kg per meter or larger.

The at least one high-voltage cable of the lower tower section includes, for example, multiple (e.g., three or another number) high-voltage cables running in parallel with each other.

The platform of the lower tower section is, in particular, an inside platform. The platform of the lower tower section is, in particular, arranged in an inner cavity of the lower tower section. The platform of the lower tower section is, for example, attached to an inner tower wall of the lower tower section and/or suspended from a flange at the upper end of the lower tower section. The platform of the lower tower section is, for example, configured as a platform for workers mechanically connecting the lower tower section with the upper tower section. The platform of the lower tower section is, for example, a bolting platform configured for bolting a flange of the lower tower section to a further flange of the upper tower section.

The junction box arranged on the platform is, for example, mounted on the platform. The junction box has, for example, a box-like shape.

The junction box is configured for electrically connecting the at least one high-voltage cable and the at least one further high-voltage cable with each other.

The platform may optionally comprise one or more cutouts below the junction box. The cutout(s) is/are configured for routing blowout gases from the junction box from a space above the platform to a space below the platform. The blowout gases can contain hot gases, sparks and/or potentially flammable materials. By use of the cutout(s) and optionally one or more ducts the blowout gases can be safely routed away from a sensitive area reducing the risk of fires, explosions and contact with personnel.

The transport of electrical power from the generator to the bottom portion of the tower (e.g., the switch gear) may be performed by more than one assembled high-voltage cable. In this case, the number of the high-voltage cables of the lower tower section equals the number of the high-voltage cables of the upper tower section, the number of the input terminals of the junction box and the number of the output terminals of the junction box.

All directions and height designations herein (e.g., lower, upper, vertical, horizontal, first to third height etc.) are directions and height designations with respect to the vertical direction (i.e. height direction) of the tower and the wind turbine in the erected state of the tower and the wind turbine.

According to an embodiment of the first aspect, the platform comprises a cable connection area in which the junction box is arranged, and the cable connection area is configured for matching with and being arranged below a further cable connection area of the upper tower section.

Thus, electrically connecting the at least one high-voltage cable of the lower tower section with the at least one further high-voltage cable of the upper tower section is simplified and made safer for a worker. In particular, a worker standing on the platform in front of the junction box of the lower tower section can easily access the further high-voltage cable supported by a cable support structure arranged in the further cable connection area of the upper tower section.

The junction box has, for example, a handling side which is configured for a worker to stand in front of.

The cable connection area of the lower tower section being configured for matching with and being arranged below the further cable connection area of the upper tower section means, for example, that the cable support structure is not projecting horizontally with respect to the junction box at least at the handling side of the junction box. Hence, a worker can safely work on the cable support structure and/or on the high-voltage cables in the upper and lower tower sections. For example, a worker can safely release the at least one high-voltage cable of the upper tower section from the lower leg of the cable support structure and electrically connect it with the junction box. For example, a worker is safe from hitting the worker's head at the cable support structure when working on the cable support structure and/or the high-voltage cables.

The cable connection area of the platform is, for example, a footprint of the junction box.

According to a further embodiment of the first aspect, a first height between the platform and the upper end of the lower tower section is configured to form together with a second height between a lower end of the upper tower section and a lower leg of a U-shaped element of a cable support structure of the upper tower section an ergonomic handling height.

Thus, a distance between the platform of the lower tower section and the lower leg of the U-shaped element of the upper tower section conforms to an ergonomic handling height. The ergonomic handling height is, for example, an ergonomic handling height set by one or more international standards, government regulations and/or safety-at-work regulations. Hence, a worker standing on the platform can easily access the lower leg of the U-shaped element. In particular, accessing the lower leg of the U-shaped element and, hence, the further lower cable end of the at least one further high-voltage cable requires no scaffold or the like.

The ergonomic handling height is preferably 1.5 m or smaller. The ergonomic handling height is in addition, for example, 1.0 m or larger.

According to a further embodiment of the first aspect, a first height between the platform and the upper end of the lower tower section is configured to form together with a third height between a lower end of the upper tower section and an upper leg of a U-shaped element of a cable support structure of the upper tower section a head clearance height.

The head clearance height is, for example, a head clearance height set by one or more international standards (e.g., ISO standard ISO 14122-2), government regulations and/or safety-at-work regulations. The head clearance height is preferably 2.1 m or larger.

Thus, a distance between the platform of the lower tower section and the upper leg of the U-shaped element of the cable support structure of the upper tower section conforms to a head clearance height. With the head clearance height, workers can perform service and maintenance work safely. In particular, a worker standing on the platform can easily walk below attachment means arranged at or above the third height and with which the U-shaped element, e.g., the upper leg of the U-shaped element, is attached to the further tower wall.

According to a further embodiment of the first aspect, the junction box is arranged on the platform spaced apart from a tower wall of the lower tower section such that a walkway for a worker is formed between the junction box and the tower wall.

Thus, a worker can easily walk between the tower wall and the junction box. For example, a worker can easily access the tower wall. Further, a worker can easily access the connection means (e.g., a flange) of the lower tower section, for example for mechanically connecting the lower tower section with the upper tower section (e.g., bolting the respective flanges to each other).

A width of the walkway is, for example, a width set by one or more international standards (e.g., ISO standard ISO 14122-2), government regulations and/or safety-at-work regulations for walkways. A width of the walkway is preferably 0.8 m or larger.

According to a second aspect, an upper tower section for a tower of a wind turbine is provided. The upper tower section comprises:
further connection means at a lower end thereof for mechanical connection with a lower tower section,
at least one further high-voltage cable extending between a further lower and upper portion of the upper tower section with respect to a vertical direction in the erected state of the tower, and
a cable support structure attached to a further tower wall in the further lower portion of the upper tower section, the cable support structure having a rotated U-shaped element with an upper leg for supporting the at least one further high-voltage cable during transportation of the upper tower section and during operation of the wind turbine and a lower leg for supporting the at least one further high-voltage cable during transportation of the upper tower section.

Having the upper tower section with the at least one pre-installed further high-voltage cable allows to transport the upper tower section from a (e.g., onshore) pre-assembly site to an (e.g., offshore) erection site of the tower and the wind turbine and assemble the tower at the erection site. Hence, larger towers can be manufactured and transported, in particular for offshore wind turbines.

The further connection means of the upper tower section are, for example, configured for mechanical connection with the connection means of the lower tower section. The further connection means comprises, for example, a flange.

The at least one further high-voltage cable is in particular at least one continuous (i.e. one-piece) further high-voltage cable extending from the further lower portion of the upper tower section to the further upper portion of the upper tower section.

The at least one further high-voltage cable of the upper tower section includes, for example, multiple (e.g., three or another number) high-voltage cables running in parallel with each other.

The at least one further high-voltage cable has, in particular, a further upper cable end stored during transportation of the upper tower section in the further upper portion of the upper tower section. In the assembled state of the tower/wind turbine, the further upper cable end of the at least one further high-voltage cable is electrically connected with the generator at the nacelle or with another at least one high-voltage cable of a further tower section arranged above the upper tower section.

Moreover, the at least one further high-voltage cable has a further lower cable portion with a further lower cable end stored during transportation of the upper tower section in the lower portion of the upper tower section. In particular, the further lower cable portion of the at least one further high-voltage cable is supported and fixed to the cable support structure, i.e. the lower and upper legs of the cable support structure. In the assembled state of the tower/wind turbine, the further lower cable end of the at least one further high-voltage cable is electrically connected with the junction box of the lower tower section.

The cable support structure comprises, for example, attachment means (e.g., one or more beams) for attachment to the further tower wall of the upper tower section. The attachment means are, for example, welded to the further tower wall. The attachment means are, for example, attached to the further tower wall by weld bush.

The rotated U-shaped element has, for example, a U-shape rotated by 90°. Further, the legs of the U-shaped element may, for example, be of equal length.

The cable support structure comprises, for example, multiple clamps with which the at least one further high-voltage cable is fixed during transportation to the upper and lower legs. In the assembled state of the tower/wind turbine and, hence, during operation of the wind turbine, the further high-voltage cable is fixed by means of the clamps only to the upper leg - but not to the lower leg.

During transportation, the at least one further high-voltage cable comprise in its lower cable portion a first U-shaped bend corresponding to the U-shape of the U-shaped element. The first U-shaped bend has a first distance between its legs. In the assembled state of the tower/wind turbine and, hence, during operation of the wind turbine, the at least one further high-voltage cable comprise in its lower portion a second U-shaped bend having a second distance between its legs, the second distance being larger than the first distance. Furthermore, the legs of the first U-shaped bend may be of equal length, while the legs of the second U-shaped bend may be of different length, the length of an upper leg of the second U-shaped bend being larger than a length of a lower leg of the second U-shaped bend.

According to an embodiment of the second aspect, a horizontal area occupied by the U-shaped element defines a further cable connection area of the upper tower section, and the further cable connection area is configured for matching with and being arranged above a cable connection area of the lower tower section.

Thus, releasing the at least one further high-voltage cable of the upper tower section from the lower leg of the U-shaped element of the cable support structure and electrically connecting the at least one further high-voltage cable of the upper tower section with the at least one high-voltage cable of the lower tower section is simplified and made safer for a worker. In particular, a worker standing on the platform in front of the junction box of the lower tower section can easily access the further high-voltage cable supported by the cable support structure of the upper tower section.

According to a further embodiment of the second aspect, a second height between the lower end of the upper tower section and the lower leg of the U-shaped element is configured to form together with a first height between a platform and an upper end of the lower tower section an ergonomic handling height.

According to a further embodiment of the second aspect, a third height between the lower end of the upper tower section and the upper leg of the U-shaped element is configured to form together with a first height between a platform and an upper end of the lower tower section a head clearance height.

Furthermore, the U-shaped element is attached to the further tower wall by attachment means arranged entirely at or above the third height.

According to a further embodiment of the second aspect,
the cable support structure comprises multiple beams with which the U-shaped element is attached to the further tower wall such that the U-shaped element is spaced apart from the further tower wall,
the U-shaped element is spaced apart from the further tower wall such that a walkway for a worker is formed between the U-shaped element and the further tower wall, and/or
the multiple beams are arranged entirely at or above a third height defined by the upper leg of the cable support structure.

By the multiple beams, the U-shaped element can be attached to the further tower wall and at the same time leave a walkway for a worker below the beams. The walkway allows access for a worker to the tower wall and to the connections means (e.g., flanges).

The multiple beams comprise, for example, one or more horizontally orientated beams. In case of multiple horizontally orientated beams, the beams may, for example, be inclined to each other for stability reasons. Furthermore, the multiple beams comprise, for example, one or more inclined beams being inclined from the horizontal orientation upwards for stability reasons.

According to a further embodiment of the second aspect, the at least one further high-voltage cable comprises a free-hanging bend ahead of the U-shaped element with respect to a downwards direction along the cable.

Having the free-hanging bend of the at least one further high-voltage cable, an additional length of the at least one further high-voltage cable due to length tolerances in manufacturing the cable(s) and/or thermal expansion due to high temperatures can be accommodated.

According to a further embodiment of the first and/or second aspect,
the lower tower section is configured for connection at its lower end with a further tower section and is configured in its lower portion as the upper tower section is configured in its lower portion, and/or
the upper tower section is configured for connection at its upper end with a further tower section and is configured in its upper portion as the lower tower section is configured in its upper portion.

In particular, the lower tower section comprises in its lower portion a cable support structure similar as the above-described cable support structure of the upper tower section.

Alternatively or in addition, the upper tower section comprises in this embodiment in its further upper portion a platform with a junction box similar as the above-described platform with a junction box of the lower tower section.

Thus, the tower may be assembled from more than two tower sections, each tower section being provided with at least one (e.g., continuous, i.e. one-piece) pre-assembled high-voltage cable.

According to a third aspect, a tower for a wind turbine and/or a wind turbine with a tower is provided. The tower comprises at least one of the above-described lower tower section, and at least one of the above-described upper tower section. Furthermore, the at least one lower tower section and the at least one upper tower section are mechanically connected with each other at their respective connection means. Further, preferably the at least one further high-voltage cable of the upper tower section is electrically connected with the junction box of the lower tower section.

According to a fourth aspect, a method for manufacturing an above-described tower of a wind turbine is provided. The method comprises:
a) mechanically connecting the at least one lower tower section and the at least one upper tower section with each other at their respective connection means, and
b) releasing the at least one further high-voltage cable from the lower leg of the cable support structure of the at least one upper tower section and electrically connecting it with the junction box of the at least one lower tower section.

In step b), the at least one further high-voltage cable is mechanically released from the lower leg of the cable support structure. Further, by electrically connecting the (further lower cable end of the) at least one further high-voltage cable with the junction box, the at least one further high-voltage cable is also mechanically connected with the junction box.

According to an embodiment of the fourth aspect, the method comprises before step a):
providing the at least one lower tower section with the at least one pre-installed high-voltage cable extending between the lower and the upper portions of the at least one lower tower section, wherein an upper cable end of the at least one high-voltage cable is electrically connected with the junction box,
providing the at least one upper tower section with the at least one further pre-installed high-voltage cable extending between the further lower and upper portions of the at least one upper tower section, wherein the at least one further high-voltage cable is mechanically connected with the lower and upper legs of the U-shaped element of the cable support structure, and/or
transporting the at least one lower and/or upper tower sections to an erection site of the wind turbine.

The erection site is, for example, an offshore erection site. The erection site is, in particular, a wind harvesting site.

A further preferable embodiment of the present invention covers a kit-of-parts, specifically a combination of a lower tower section according to any of the embodiments of the invention with an upper tower section according to any of the embodiments of the invention in a non-assembled state. The term "non-assembled2 signifies that the lower and the upper tower section are not mechanically connected with each other at their respective connection means.

The embodiments and features described with reference to the first aspect of the present invention apply mutatis mutandis to the second to fourth aspect of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a flowchart illustrating a method for manufacturing a tower of a wind turbine according to an embodiment;
Fig. 3 shows a platform of a lower tower section and a cable support structure of an upper tower section of a tower of the wind turbine of Fig. 1 according to an embodiment;
Fig. 4 shows a view similar as Fig. 3, wherein high-voltage cables of the upper tower sections are electrically connected with high-voltage cables of the lower tower section according to an embodiment;
Fig. 5 shows the platform and the cable support structure of Fig. 3 in a top view according to an embodiment;
Fig. 6 shows portions of the lower and upper tower sections of Fig. 3 according to an embodiment; and
Fig. 7 illustrates a free-hanging bend of the high-voltage cable of the upper tower section of Fig. 3 according to an embodiment.

In the Figures, like reference numerals designate like or functionally equivalent elements, unless otherwise indicated.

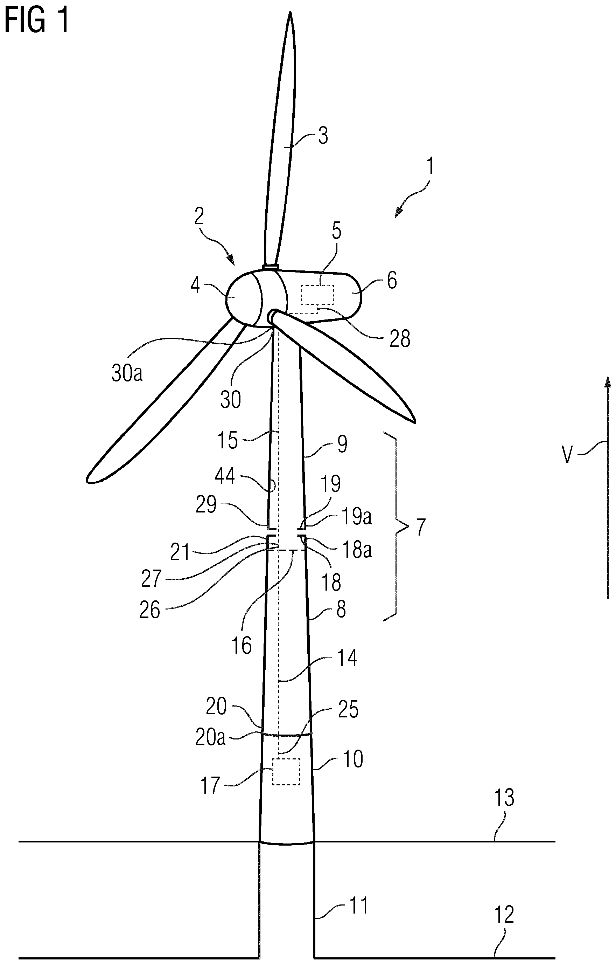

Fig. 1 shows a wind turbine 1 according to an embodiment. The wind turbine 1 comprises a rotor 2 having one or more blades 3 connected to a hub 4. The hub 4 is connected to a generator 5 arranged at (e.g., in) a nacelle 6. During operation of the wind turbine 1, the blades 3 are driven by wind to rotate and the wind's kinetic energy is converted into electrical energy by the generator 5. The nacelle 6 is arranged at the upper end of a tower 7 of the wind turbine 1. The tower 7 is a split tower comprising at least two tower sections 8, 9. In the example of Fig. 1, the tower 7 comprises a lower tower section 8 and an upper tower section 9. The lower and upper tower sections 8, 9 are lower and upper tower sections with respect to a vertical direction V of the tower 7 and the wind turbine 1 in an erected state. The tower 7 is erected - optionally via a transition piece 10 - on a foundation 11. In the example of Fig. 1, the wind turbine 1 is an offshore wind turbine and the foundation 11 includes a foundation such as a monopile or tripod driven into the seabed 12 or a flouting foundation (not shown). The reference sign 13 denotes a water surface.

As shown in Fig. 1, the wind turbine 1 comprises at least two high-voltage cables 14, 15 electrically connected with each other at a platform 16 of the lower tower section 8. In particular, the lower tower section 8 comprises at least one high-voltage cable 14. Further, the upper tower section 9 comprises at least one further high-voltage cable 15.

The at least two electrically connected high-voltage cables 14, 15 together electrically connect the generator 5 at the nacelle 5 with a switch gear 17 (e.g., arranged in the transition piece 10) of the wind turbine 1. The at least two electrically connected high-voltage cables 14, 15 are configured for transporting power generated by the generator 5 to the switch gear 17.

The lower tower section 8 comprises connections means 18 (e.g., a flange 18) at an upper end 18a of the lower tower section 8. Further, the upper tower section 9 comprises further connections means 19 (e.g., a further flange 19) at a lower end 19a of the upper tower section 9.

In the assembled state of the tower 7, the lower tower section 8 and the upper tower section 9 are mechanically connected with each other at their respective connections means 18, 19 (e.g., flanges 18, 19 bolted to each other).

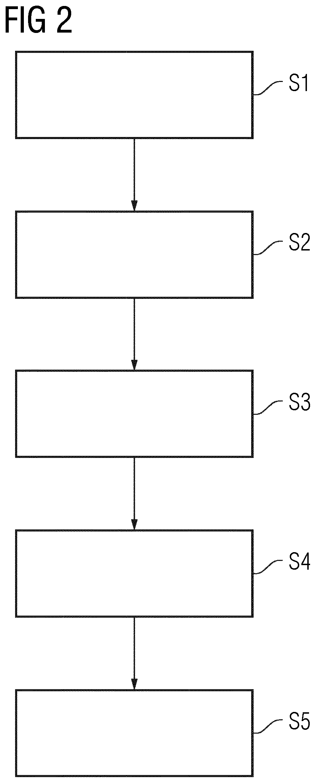

In the following, a method for manufacturing a tower 7 of a wind turbine 1 is described with reference to Figs. 1 to 7.

In a first step S1 of the method, a lower tower section 8 with at least one pre-installed high-voltage cable 14 is provided.

The at least one high-voltage cable 14 is, for example, installed in the lower tower section 8 at a pre-assembling site (e.g., an onshore pre-assembling site).

In step S1, the at least one high-voltage cable 14 is, for example, pulled into the lower tower section 8. The at least one high-voltage cable 14 is, in particular, pre-installed in the lower tower section 8 such that it extends between a lower portion 20 and an upper portion 21 of the lower tower section 8 (Fig. 1).

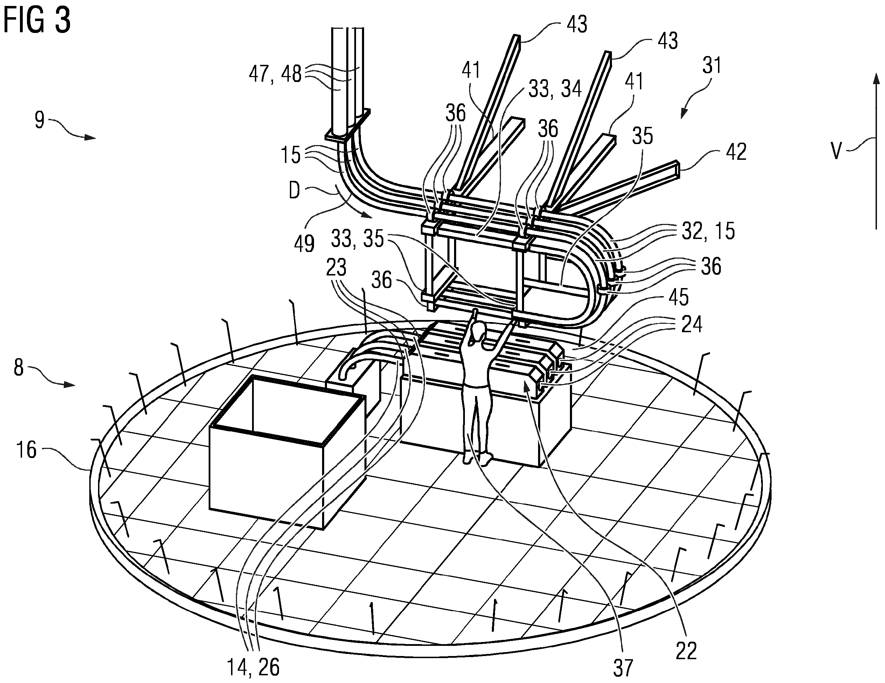

The lower tower section 8 comprises a platform 16 (Fig. 1) in its upper portion 21. Fig. 3 shows a detailed view of the platform 16. As can be seen in Fig. 3, the lower tower section 8 further comprises a junction box 22 arranged on the platform 16 (e.g., mounted on the platform 16). The junction box 22 is configured for electrically connecting the at least one high-voltage cable 14 of the lower tower section 8 and the at least one further high-voltage cable 15 of the upper tower section 9.

Just as an example, there are shown three high-voltage cables 14 of the lower tower section 8 and three further high-voltage cables 15 of the upper tower section 9. Having more than one high-voltage cable 14 and more than one further high-voltage cable 15 allows to transport more electrically power without increasing a cross-section of the cables 14, 15.

The junction box 22 has at least one output terminal 23 and at least one input terminal 24. In the example of Fig. 3, there are three output and three input terminals 23, 24 shown.

Fig. 3 shows portions of the lower and upper tower sections 8, 9 in a state in which the lower and upper tower sections 8, 9 are arranged on top of each other (e.g., at an erection site) but the high-voltage cables 14, 15 are not yet electrically connected with each other. Hence, Fig 3 shows a state after step S3 of the method and during or after step S4 of the method. It is noted that during steps S1 to S3, the lower and upper tower sections 8, 9 are - in contrast to the illustration in Fig. 3 not yet at the erection site and are not yet arranged on top of each other.

The at least one high-voltage cable 14 of the lower tower section 8 has a lower cable end 25 and an upper cable end 26 with respect to the vertical direction V (Fig. 1). During step S1, the upper cable end 26 of the at least one high-voltage cable 14 is electrically connected with the at least one output terminal 23 of the junction box 22.

The at least one further high-voltage cable 15 (Fig. 1) of the upper tower section 9 has a further lower cable end 27 and a further upper cable end 28 with respect to the vertical direction V. The at least one input terminal 24 of the junction box 22 (Fig. 3) is configured for electrical connection with the further lower cable end 27 of the at least one further high-voltage cable 15 of the upper tower section 9. However, during steps S1 to S3, the further lower cable end 27 of the at least one further high-voltage cable 15 is not yet electrically connected with the junction box 22 of the lower tower section 8.

In a second step S2 of the method, the upper tower section 9 with the at least one further pre-installed high-voltage cable 15 is provided.

The at least one further high-voltage cable 15 is, for example, installed in the upper tower section 9 at the (e.g., onshore) pre-assembling site.

In step S2, the at least one further high-voltage cable 15 is, for example, pulled into the upper tower section 9. The at least one further high-voltage cable 15 is, in particular, pre-installed in the upper tower section 9 such that it extends - with respect to the vertical direction V (Fig. 1) - between a further lower portion 29 and a further upper portion 30 of the upper tower section 9 (Fig. 1).

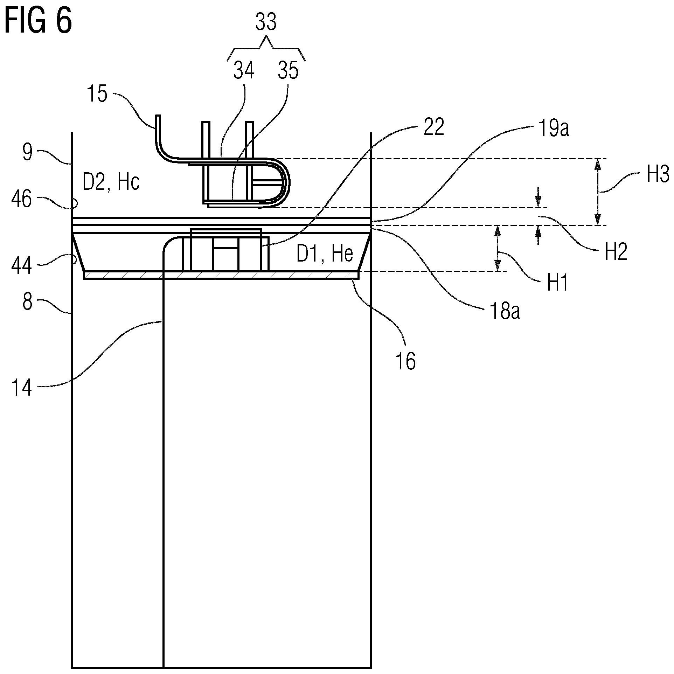

The upper tower section 8 comprises a cable support structure 31 (Fig. 3). The cable support structure 31 is arranged in the further lower portion 29 of the upper tower section 9. In addition, the cable support structure 31 is attached to a further inner tower wall 44 (Fig. 6) of the upper tower section 9.

The cable support structure 31 is configured for supporting the at least one further high-voltage cable 15 of the upper tower section 9 during transport of the upper tower section 9 as well as during operation of the wind turbine. The cable support structure 31 is, in particular, configured for supporting a further lower cable portion 32 of the at least one further high-voltage cable 15 (Fig. 3).

As can be seen in Fig. 3, the cable support structure 31 has a rotated U-shaped element 33 rotated by about 90°. The rotated U-shaped element 33 comprises an upper leg 34 and a lower leg 35. The upper leg 34 is configured for supporting the at least one further high-voltage cable 15 during transportation of the upper tower section 9 and during operation of the wind turbine 1. The lower leg 35 is configured for supporting the at least one further high-voltage cable 15 only during transportation of the upper tower section 9 (i.e. not in the completely assembled state of the tower 7 and not during operation of the wind turbine 1).

The cable support structure 31 comprises, for example, several clamps 36 (some of them are denoted with a reference sign in Fig. 3) for fixing the at least one high-voltage cable 15 to the U-shaped element 33.

In step S2, the at least one further high-voltage cable 15 is arranged at and mechanically connected (e.g., fixed by means of the clamps 36) with the upper leg 34 and the lower leg 35 of the cable support structure 31.

Further, during step S2 (providing the upper tower section 9 with the pre-installed cale 15) and step S3 (transporting the upper tower section 9), the at least one further high-voltage cable 15 is supported (e.g., fixed by means of the clamps 36) by the upper leg 34 and the lower leg 35.

In a third step S3 of the method, the at least one lower and upper tower sections 8, 9 - each with the at least one pre-installed high-voltage cable 14, 15 - is transported from the (e.g., onshore) pre-assembling site to an (e.g., offshore) erection site of the wind turbine 1.

In a fourth step S4 of the method, the at least one lower tower section 8 and the at least one upper tower section 9 are mechanically connected with each other at their respective connection means 18, 19 (Fig. 1). For example, the flanges 18, 19 are bolted to each other.

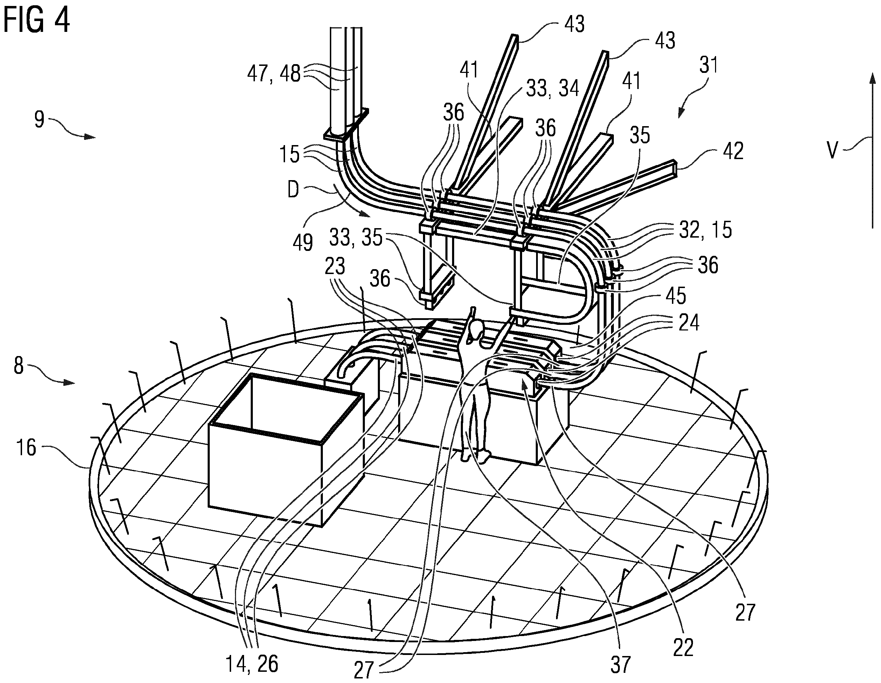

In a fifth step S5 of the method, the at least one further high-voltage cable 15 is released from the lower leg 35 of the U-shaped element 33 of the cable support structure 31 of the upper tower section 9, as shown in Fig. 4. Next, the further lower cable end 27 of the at least one further high-voltage cable 15 is guided towards the at least one input terminal 24 of the junction box 22. Then, the further lower cable end 27 of the at least one further high-voltage cable 15 is electrically connected with the at least one input terminal 24 of the junction box 22.

In the following, further optional features of the lower and upper tower sections 8, 9 and of the tower 7 are described.

As shown in Figs. 3 and 4, the U-shaped element 31 of the upper tower section 9 is arranged above the junction box 22 of the lower tower section 8. This allows a worker 37 standing on the platform 16 in front of the junction box 22 to safely work on the U-shaped element 33 (e.g., release the at least one high-voltage cable 15 from the lower leg 35) without hitting the worker's head on the U-shaped element 33.

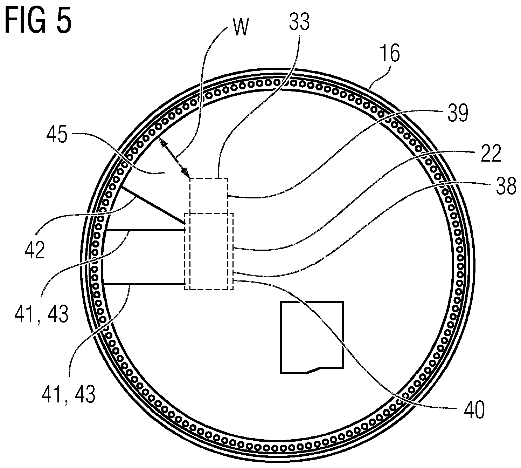

In particular, the platform 16 comprises a cable connection area 38 in which the junction box 22 is arranged, as shown in Fig. 5. The cable connection area 38 is, for example, defined by a footprint of the junction box 22. Furthermore, the upper tower section 9 comprises a further cable connection area 39. The further cable connection area 39 is defined by a horizontal area (perpendicular to the direction V in Fig. 1) occupied by the U-shaped element 33, see Fig. 5.

The cable connection area 38 of the lower tower section 8 and the further cable connection area 39 of the upper tower section 9 are configured to match with each other and are arranged above each other with respect to the vertical direction V (Fig. 1). This means that the U-shaped element 33 of the cable support structure 31 is not projecting horizontally with respect to the junction box 22 at least at a handling side 40 of the junction box 22. Therefore, a worker 37 (Fig. 4) can safely work on the U-shaped element 33 and/or on the at least one further high-voltage cable 15. For example, a worker 37 can safely release the at least one further high-voltage cable 15 from the lower leg 35 of the U-shaped element 33 and can electrically connect it with the junction box 22.

According to another optional feature, the lower and upper tower sections 8, 9 are configured such that a distance D1 between the platform 16 of the lower tower section 8 and the lower leg 35 of the U-shaped element 33 of the upper tower section 9 conforms to an ergonomic handling height Hₑ, as shown in Fig. 6.

In particular, a first height H1 between the platform 16 and the upper end 18a of the lower tower section 8 forms together with a second height H2 between the lower end 19a of the upper tower section 9 and the lower leg 25 of the U-shaped element 33 the ergonomic handling height Hₑ (Hₑ = H1 + H2). The ergonomic handling height Hₑ is, for example, 1.5 m or larger. The ergonomic handling height Hₑ allows a worker 37 standing on the platform 16 easy access to the U-shaped element 33, in particular its lower leg 35.

As shown in Figs. 3, 4, the cable support structure 33 may comprise multiple beams 41, 42, 43 with which the U-shaped element 33 is attached to the further tower wall 44. By the multiple extended beams 41, 42, 43, the U-shaped element 33 can be attached to the further tower wall 44 such that the U-shaped element 33 is spaced apart from the further tower wall 44. The multiple beams 41, 42, 43 are, for example, arranged entirely at or above the third height H3 defined by a distance of the upper leg 34 of the U-shaped element 33 from the further lower end 19a of the upper tower section 9. Hence, the U-shaped element 33 can be spaced apart from the further tower wall 44 such that a walkway 45 (Fig. 5) for a worker 37 is formed between the U-shaped element 33 and the further tower wall 44 and below the beams 41 to 43.

Moreover, the lower and upper tower sections 8, 9 may be configured such that a distance D2 between the platform 16 of the lower tower section 8 and the upper leg 34 of the U-shaped element 33 of the upper tower section 9 conforms to a head clearance height H_{c}, as shown in Fig. 6. Hence, a worker 27 can safely walk on the walkway 45 (Fig. 4) without the risk of hitting the worker's head, e.g., at one of the beams 41 to 43.

In particular, the first height H1 between the platform 16 and the upper end 18a of the lower tower section 8 and a third height H3 between the lower end 19a of the upper tower section 9 and the upper leg 34 of the U-shaped element 33 form together the head clearance height H_{c} (H_{c} = H1 + H3). The head clearance height H_{c} is, for example, 2.1 m or larger.

Furthermore, a width W (Fig. 5) of the walkway 45 between the junction box 22 and the tower walls 44, 46 of the lower and upper tower sections 8, 9 conforms, for example, to a minimum width of 0.8 m such that a worker 37 can safely walk there.

As shown in Fig. 3, the at least one further high-voltage cable 15 of the upper tower section 9 comprises a vertical portion 47. The vertical portion 47 of the at least one further high-voltage cable 15 is, for example, inserted into at least one tube (e.g., aluminum tube), as visible in Fig. 3. Furthermore, the at least one further high-voltage cable 15 comprises, e.g., adjacent to its vertical portion 47 a free-hanging bend 49. With respect to a downwards direction D along the cable 15, the free-hanging bend 49 is arranged ahead of the U-shaped element 33 of the cable support structure 31.

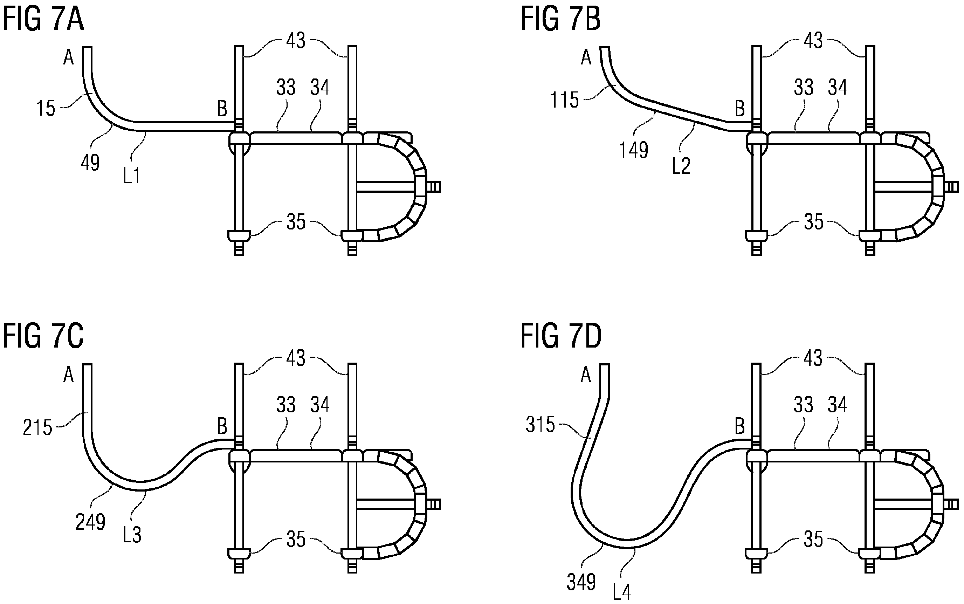

Fig. 7 illustrated four different situations (Figs. 7A to 7D) of the free-hanging bend 49, 149, 249, 349 of the at least one further high-voltage cable 15, 115, 215, 315. In particular, the free-hanging bends 49, 149, 249, 349 in Figs. 7A to 7D differ from each other by having different cable lengths L1 (e.g., 2015 mm), L2 (e.g., 1821 mm), L3 (e.g., 2552 mm) and L4 (e.g., 3769 mm) between points A and B. As can be seen in Fig. 7, the free-hanging bend 49, 149, 249, 349 allows to accommodate an additional length of the at least one further high-voltage cable 15, 115, 215, 315. This additional length may be caused by manufacturing tolerances of the at least one further high-voltage cable 15, 115, 215, 315. Furthermore, the additional length may be caused by thermal expansion of the cable(s) 15 due to high temperatures (e.g., during summer). For example, an additional length of more than 1 m may be compensated by the free-hanging bend 49, 149, 249, 349.

Although the present invention has been described in accordance with preferred embodiments, it is obvious for the person skilled in the art that modifications are possible in all embodiments.

## Claims

1. A lower tower section (8) for a tower (7) of a wind turbine (1), comprising:
connection means (18) at an upper end (18a) thereof for mechanical connection with an upper tower section (9),
at least one high-voltage cable (14) extending between a lower and an upper portion (20, 21) of the lower tower section (8) with respect to a vertical direction (V) in the erected state of the tower (7),
a platform (16) in the upper portion (21), and
a junction box (22) arranged on the platform (16), having at least one output terminal (23) electrically connected with an upper cable end (26) of the at least one high-voltage cable (14) and at least one input terminal (24) configured for electrical connection with at least one further high-voltage cable (15) of the upper tower section (9).

2. The lower tower section (8) according to claim 1, wherein the platform (16) comprises a cable connection area (38) in which the junction box (22) is arranged, and the cable connection area (38) is configured for matching with and being arranged below a further cable connection area (39) of the upper tower section (9).

3. The lower tower section (8) according to claim 1 or 2, wherein a first height (H1) between the platform (16) and the upper end (18a) of the lower tower section (8) is configured to form together with a second height (H2) between a lower end (19a) of the upper tower section (9) and a lower leg (35) of a U-shaped element (33) of a cable support structure (31) of the upper tower section (9) an ergonomic handling height (Hₑ).

4. The lower tower section (8) according to one of claims 1 to 3, wherein a first height (H1) between the platform (16) and the upper end (18a) of the lower tower section (8) is configured to form together with a third height (H3) between a lower end (19a) of the upper tower section (9) and an upper leg (34) of a U-shaped element (33) of a cable support structure (31) of the upper tower section (9) a head clearance height (H_{c}).

5. The lower tower section (8) according to one of claims 1 to 4, wherein the junction box (22) is arranged on the platform (16) spaced apart from a tower wall (44) of the lower tower section (8) such that a walkway (45) for a worker (37) is formed between the junction box (22) and the tower wall (44).

6. An upper tower section (9) for a tower (7) of a wind turbine (1), comprising:
further connection means (19) at a lower end (19a) thereof for mechanical connection with a lower tower section (8),
at least one further high-voltage cable (15) extending between a further lower and upper portion (29, 30) of the upper tower section (9) with respect to a vertical direction (V) in the erected state of the tower (7), and
a cable support structure (31) attached to a further tower wall (46) in the further lower portion (29) of the upper tower section (9), the cable support structure (31) having a rotated U-shaped element (33) with an upper leg (34) for supporting the at least one further high-voltage cable (15) during transportation of the upper tower section (9) and during operation of the wind turbine (1) and a lower leg (35) for supporting the at least one further high-voltage cable (15) during transportation of the upper tower section (9).

7. The upper tower section (9) according to claim 6, wherein a horizontal area occupied by the U-shaped element (33) defines a further cable connection area (39) of the upper tower section (9), and the further cable connection area (39) is configured for matching with and being arranged above a cable connection area (38) of the lower tower section (8).

8. The upper tower section (9) according to claim 6 or 7, wherein a second height (H2) between the lower end (19a) of the upper tower section (9) and the lower leg (35) of the U-shaped element (33) is configured to form together with a first height (H1) between a platform (16) and an upper end (18a) of the lower tower section (8) an ergonomic handling height (Hₑ).

9. The upper tower section (9) according to one of claims 6 to 8, wherein
a third height (H3) between the lower end (19a) of the upper tower section (9) and the upper leg (34) of the U-shaped element (33) is configured to form together with a first height (H1) between a platform (16) and an upper end (18a) of the lower tower section (8) a head clearance height (H_{c}), and
the U-shaped element (33) is attached to the further tower wall (46) by attachment means (41, 42, 43) arranged entirely at or above the third height (H3).

10. The upper tower section (9) according to one of claims 6 to 9, wherein
the cable support structure (31) comprises multiple beams (41, 42, 43) with which the U-shaped element (33) is attached to the further tower wall (46) such that the U-shaped element (33) is spaced apart from the further tower wall (46),
the U-shaped element (33) is spaced apart from the further tower wall (46) such that a walkway (45) for a worker (37) is formed between the U-shaped element (33) and the further tower wall (46), and/or
the multiple beams (41, 42, 43) are arranged entirely at or above a third height (H3) defined by the upper leg (34) of the cable support structure (31).

11. The upper tower section (9) according to one of claims 6 to 10, wherein the at least one further high-voltage cable (15) comprises a free-hanging bend (49) ahead of the U-shaped element (33) with respect to a downwards direction (D) along the cable (15).

12. The lower tower section (8) according to one of claims 1 to 5 and/or the upper tower section (9) according to one of claims 6 to 11, wherein
the lower tower section (8) is configured for connection at its lower end (20a) with a further tower section and is configured in its lower portion (20) as the upper tower section (9) is configured in its lower portion (29), and/or
the upper tower section (9) is configured for connection at its upper end (30a) with a further tower section and is configured in its upper portion (30) as the lower tower section (8) is configured in its upper portion (21).

13. A tower (7) for a wind turbine (1) and/or a wind turbine (1) with a tower (7), comprising:
at least one lower tower section (8) according to one of claims 1 to 5 and 12, and
at least one upper tower section (9) according to one of claims 6 to 12,
wherein the at least one lower tower section (8) and the at least one upper tower section (9) are mechanically connected with each other at their respective connection means (18, 19), and
preferably the at least one further high-voltage cable (15) of the upper tower section (9) is electrically connected with the junction box (22) of the lower tower section (8).

14. A method for manufacturing a tower (7) of a wind turbine (1) according to claim 13, comprising:
a) mechanically connecting (S4) the at least one lower tower section (8) and the at least one upper tower section (9) with each other at their respective connection means (18, 19), and
b) releasing (S5) the at least one further high-voltage cable (15) from the lower leg (35) of the cable support structure (31) of the at least one upper tower section (9) and electrically connecting it (15) with the junction box (22) of the at least one lower tower section (8).

15. The method according to claim 14, comprising before step a) :
providing (S1) the at least one lower tower section (8) with the at least one pre-installed high-voltage cable (14) extending between the lower and the upper portions (20, 21) of the at least one lower tower section (8), wherein an upper cable end (26) of the at least one high-voltage cable (14) is electrically connected with the junction box (22),
providing (S2) the at least one upper tower section (9) with the at least one further pre-installed high-voltage cable (15) extending between the further lower and upper portions (29, 30) of the at least one upper tower section (9), wherein the at least one further high-voltage cable (15) is mechanically connected with the lower and upper legs (34, 35) of the U-shaped element (33) of the cable support structure (31), and/or
transporting (S3) the at least one lower and/or upper tower sections (8, 9) to an erection site of the wind turbine (1).
